# EUROPÄISCHE PATENTANMELDUNG

(11) **EP 2 803 521 A2**
(43) Veröffentlichungstag der Anmeldung: **19.11.2014**
(21) Anmeldenummer: 14168009.0
(22) Anmeldetag: 13.05.2014
(51) Int. Cl.: B60K 31/04, B60K 31/18, B60W 30/14, B60K 31/00, B60W 50/08, B60W 50/14

(54) **Fahrassistenzvorrichtung für ein Kraftfahrzeug mit einer Einrichtung zur Verkehrszeichen-Überwachung und einer Einrichtung zur Begrenzung der Fahrzeug-Geschwindigkeit**

(30) Priorität: 16.05.2013 DE 102013209064
(71) Anmelder: Ford Global Technologies, LLC, Dearborn, MI 48126 (US)
(72) Erfinder: Ediger, Andreas, 51065 Köln (DE); Kappes, Stefan, 50259 Pulheim (DE); Wey, Torsten, 47447 Moers (DE); Gunia, Dirk, 42799 Leichlingen (DE); Allexi, Gregor, 50825 Köln (DE)
(74) Vertreter: Dörfler, Thomas

(57) **Zusammenfassung**

Die vorliegende Erfindung betrifft eine Fahrassistenzvorrichtung für ein Kraftfahrzeug, wobei das Kraftfahrzeug eine Verkehrszeichenüberwachungseinrichtung sowie eine Geschwindigkeitsbegrenzungseinrichtung aufweist, welche die Fahrgeschwindigkeit des Kraftfahrzeuges in einem Geschwindigkeitsbegrenzungsmodus auf einen Grenzwert begrenzt. Die Fahrassistenzvorrichtung ist dazu konfiguriert, in dem Geschwindigkeitsbegrenzungsmodus den jeweils geltenden Grenzwert in Abhängigkeit von einer von der Verkehrszeichenüberwachungseinrichtung ermittelten vorgeschriebenen Höchstgeschwindigkeit automatisch anzupassen, sofern keine manuelle Änderung dieses Grenzwertes durch den Fahrer erfolgt.

## Beschreibung

Die vorliegende Erfindung betrifft eine Fahrassistenzvorrichtung für ein Kraftfahrzeug.

Zur Unterstützung des Fahrers eines Kraftfahrzeuges bei der Beibehaltung einer bestimmten Geschwindigkeit und zur Reduzierung der Stressbelastung während der Fahrt sind diverse manuell betätigbare Geschwindigkeitsbegrenzungseinrichtungen von unterschiedlichen Fahrzeugherstellern entwickelt worden. Diese Vorrichtungen werden i.d.R. unmittelbar über Eingaben des Fahrers mittels Tasten oder Schalter gesteuert, wobei die Geschwindigkeit des Kraftfahrzeuges auf die jeweils gewählte Geschwindigkeit reduziert wird und wobei es ohne Vornahme einer bestimmten Aktion (z.B. die Betätigung des Gaspedals bis in eine bestimmte Position) nicht mehr möglich ist, die eingestellte Grenzgeschwindigkeit zu überschreiten.

Bei Kraftfahrzeugen mit Verbrennungsmotor wird die gewählte Geschwindigkeit in der Motorsteuerungseinheit verarbeitet und in eine entsprechende, den Zylindern zugeführte Kraftstoffeinspritzmenge umgerechnet. Die Fahrzeuggeschwindigkeit behält den betreffenden Wert selbst dann bei, wenn vom Fahrer über die Betätigung des Gaspedals eine höhere Geschwindigkeit angefordert wird. Wenn beispielsweise während der Fahrt auf einem Gefälle die Fahrzeuggeschwindigkeit über die eingestellte Geschwindigkeit hinaus ansteigt, kann eine akustische oder visuelle Warnung des Fahrers erfolgen.

Des Weiteren sind Systeme entwickelt worden, bei denen eine kontinuierliche Verkehrszeichenüberwachung erfolgt, um den Fahrer über die aktuelle vorgeschriebene Höchstgeschwindigkeit zu informieren. Solche Systeme arbeiten typischerweise kamera- oder navigationsgestützt, wobei die Information über eine Geschwindigkeitsbegrenzung im unmittelbaren Sichtfeld des Fahrers, z.B. auf der Armaturentafel, angezeigt wird. Um die maximale Fahrzeuggeschwindigkeit an die aktuell vorgeschriebene Höchstgeschwindigkeit anzupassen, muss der Fahrer dann zunächst die Information über die vorgeschriebene Höchstgeschwindigkeit erfassen und anschließend die tatsächliche Geschwindigkeitsbegrenzung auf diesen Wert einstellen, was insbesondere bei häufiger Änderung der vorgeschriebenen Höchstgeschwindigkeit eine zusätzliche Belastung und Ablenkung für den Fahrer darstellen kann.

Aus DE 10 2012 102 564 A1 und US 2012/0253628 A1 ist eine Fahrtunterstützungsvorrichtung für ein Kraftfahrzeug bekannt, bei welcher eine Stereobilderkennungsvorrichtung detektiert, wann ein Tempolimit nicht mit der gewählten Fahrzeuggeschwindigkeit übereinstimmt. In diesem Falle führt eine Fahrtregelungseinheit einen Standby-Modus durch, in dem der eingestellte Wert der Fahrzeuggeschwindigkeit auf den Wert des Tempolimits umgeschaltet werden kann. Sowohl die gewählte Fahrzeuggeschwindigkeit als auch das Tempolimit werden dem Fahrer angezeigt und können so miteinander verglichen werden. Basierend auf einer Betätigung des Fahrers während des Standby-Modus kann dann wahlweise die gewählte Fahrzeuggeschwindigkeit beibehalten oder auf den Wert des Tempolimits umgeschaltet werden.

Aus DE 10 2011 053 778 A1 ist eine Geschwindigkeitsbegrenzungseinrichtung bekannt, bei welcher eine Fahrzeuggeschwindigkeit und eine auf einem Geschwindigkeitszeichen basierende Geschwindigkeitsbegrenzung detektiert werden. Nach Berechnung einer Geschwindigkeitsdifferenz zwischen der Fahrzeuggeschwindigkeit und der Geschwindigkeitsbegrenzung wird der Gaspedalöffnungsgrad mit einem basierend auf dieser Geschwindigkeitsdifferenz berechneten Gaspedalempfindlichkeitsfaktor korrigiert, um so einen Pseudogaspedalöffnungsgrad zu erhalten. Basierend hierauf sowie der Motordrehzahl wird ein Zieldrosselklappenöffnungsgrad gesetzt.

Es ist eine Aufgabe der vorliegenden Erfindung, eine Fahrassistenzvorrichtung für ein Kraftfahrzeug bereitzustellen, welche bei der Unterstützung des Fahrers in der Berücksichtigung vorgeschriebener Höchstgeschwindigkeiten einen hinreichenden Automatisierungsgrad erzielt, wobei zugleich eine zu starke Bevormundung des Fahrers vermieden wird.

Diese Aufgabe wird gemäß den Merkmalen des unabhängigen Patentanspruchs 1 gelöst.

Eine erfindungsgemäße Fahrassistenzvorrichtung für ein Kraftfahrzeug, wobei das Kraftfahrzeug eine Verkehrszeichenüberwachungseinrichtung sowie eine Geschwindigkeitsbegrenzungseinrichtung aufweist, welche die Fahrgeschwindigkeit des Kraftfahrzeuges in einem Geschwindigkeitsbegrenzungsmodus auf einen Grenzwert begrenzt, ist dazu konfiguriert, in dem Geschwindigkeitsbegrenzungsmodus den jeweils geltenden Grenzwert in Abhängigkeit von einer von der Verkehrszeichenüberwachungseinrichtung ermittelten vorgeschriebenen Höchstgeschwindigkeit automatisch anzupassen, sofern keine manuelle Änderung dieses Grenzwertes durch den Fahrer erfolgt.

Der Erfindung liegt insbesondere das Konzept zugrunde, insofern eine "intelligente" Fahrassistenzvorrichtung zu schaffen, als die Vorteile einer manuell einstellbaren Geschwindigkeitsbegrenzungsvorrichtung einerseits und einer Verkehrszeichenerkennungsvorrichtung andererseits miteinander verknüpft werden. Insbesondere beinhaltet die Erfindung das Konzept, zwar eine automatische Begrenzung der Fahrzeuggeschwindigkeit auf die aktuell erfasste vorgeschriebene Höchstgeschwindigkeit vorzunehmen, wobei jedoch zugleich eine manuelle Geschwindigkeitsbegrenzung auf Basis einer Fahrereingabe (z.B. durch Betätigung entsprechender Tasten) integriert wird.

Gemäß einer Ausführungsform ist die Fahrassistenzvorrichtung ferner dazu konfiguriert, für den Fall, dass zum Zeitpunkt der Aktivierung des Geschwindigkeitsbegrenzungsmodus die aktuelle Fahrgeschwindigkeit eine von der Verkehrszeichenüberwachungseinrichtung ermittelte vorgeschriebene Höchstgeschwindigkeit übersteigt, eine Reduzierung der Motordrehmomentanforderung auf Null innerhalb einer vorgegebenen Verzögerungszeit (von z.B. einigen Sekunden) vorzunehmen.

Gemäß einer Ausführungsform ist die Fahrassistenzvorrichtung ferner dazu konfiguriert, für den Fall, dass nach erfolgter Aktivierung des Geschwindigkeitsbegrenzungsmodus die aktuelle Fahrgeschwindigkeit eine von der Verkehrszeichenüberwachungseinrichtung ermittelte vorgeschriebene Höchstgeschwindigkeit überschreitet, eine sofortige Reduzierung der Motordrehmomentanforderung auf Null (d.h. eine abgesehen von ggf. systembedingten Reaktionszeiten ohne Verzögerung erfolgende Reduzierung der Motordrehmomentanforderung) zu veranlassen.

Gemäß einer Ausführungsform ist die Fahrassistenzvorrichtung ferner dazu konfiguriert, die Begrenzung der Fahrgeschwindigkeit des Kraftfahrzeuges in dem Geschwindigkeitsbegrenzungsmodus in Reaktion auf eine Fahrereingabe (z.B. das Durchtreten des Gaspedals, die Betätigung eines "Kick-Down"-Schalters oder auch eine beliebige andere vorgegebene Eingabe) außer Kraft zu setzen.

Gemäß einer Ausführungsform ist die Fahrassistenzvorrichtung ferner dazu konfiguriert, die Anpassung des in dem Geschwindigkeitsbegrenzungsmodus jeweils geltenden Grenzwertes in Abhängigkeit von der von der Verkehrszeichenüberwachungseinrichtung ermittelten vorgeschriebenen Höchstgeschwindigkeit unter Berücksichtigung eines vom Fahrer vorgebbaren Offsetwertes vorzunehmen.

Gemäß einer Ausführungsform ist die Fahrassistenzvorrichtung ferner dazu konfiguriert, unabhängig von der Ermittlung einer vorgeschriebenen Höchstgeschwindigkeit durch die Verkehrszeichenüberwachungseinrichtung die Fahrgeschwindigkeit auf eine vom Fahrer vorgebbare maximale Grenzgeschwindigkeit zu begrenzen.

Gemäß einer Ausführungsform ist die Fahrassistenzvorrichtung ferner dazu konfiguriert, einen vom Fahrer vorgebbaren Offsetwert und/oder eine vom Fahrer vorgebbare maximale Grenzgeschwindigkeit nach Abschalten der Zündung des Kraftfahrzeuges zu speichern.

Gemäß einer Ausführungsform ist die Fahrassistenzvorrichtung ferner dazu konfiguriert, im Geschwindigkeitsbegrenzungsmodus ein Warnsignal zu erzeugen, falls eine von der Verkehrszeichenüberwachungseinrichtung ermittelte vorgeschriebene Höchstgeschwindigkeit überschritten wird. Dabei wird gemäß einer bevorzugten Ausführungsform bei der Erzeugung dieses Warnsignals durch die Fahrassistenzvorrichtung die Erzeugung eines zusätzlichen Warnsignals durch die Verkehrszeichenüberwachungseinrichtung unterdrückt. Für die Auslösung des Warnsignals kann zur ermittelten vorgeschriebenen Höchstgeschwindigkeit eine Toleranzgeschwindigkeit addiert werden, damit das Warnsignal nicht genau bei Erreichen der Höchstgeschwindigkeit ausgelöst wird, sondern z. B. erst später bei Erreichen der vorgeschriebenen Höchstgeschwindigkeit plus 3 km/h.

Gemäß einer Ausführungsform ist die Fahrassistenzvorrichtung ferner dazu konfiguriert, in einer Situation, in der keine von der Verkehrszeichenüberwachungseinrichtung ermittelte vorgeschriebene Höchstgeschwindigkeit vorliegt, oder in Reaktion auf eine Fahrereingabe aus dem Geschwindigkeitsbegrenzungsmodus in einen Standby-Zustand überzugehen, wobei dieser Standby-Zustand dem Fahrer signalisiert wird.

Weitere Ausgestaltungen der Erfindung sind der Beschreibung sowie den Unteransprüchen zu entnehmen.

Die Erfindung wird nachstehend anhand bevorzugter Ausführungsbeispiele unter Bezugnahme auf die beigefügten Abbildungen näher erläutert.

Es zeigen:
- Figur 1: ein Diagramm zur Erläuterung der Reduzierung der Motordrehmomentanforderung bei einer Überschreitung der vorgeschriebenen Höchstgeschwindigkeit gemäß einer Ausführungsform der Erfindung;
- Figur 2: ein Diagramm zur Erläuterung einer Ausführungsform zur möglichen Außerkraftsetzung einer vorgegebenen Geschwindigkeitsbegrenzung durch den Fahrer; und
- Figur 3: ein Diagramm zur Erläuterung der möglichen Außerkraftsetzung einer vorgegebenen Geschwindigkeitsbegrenzung durch den Fahrer gemäß einer weiteren Ausführungsform.

Im Folgenden wird ein beispielhafter Betrieb der erfindungsgemäßen Fahrassistenzvorrichtung beschrieben.

Der Betrieb der erfindungsgemäßen Fahrassistenzvorrichtung kann zunächst über eine Fahrereingabe (z.B. die Betätigung einer Taste) aktiviert werden. Wenn zum Zeitpunkt dieser Aktivierung bereits eine Information über eine vorgeschriebene Höchstgeschwindigkeit der Fahrassistenzvorrichtung vorliegt, sind die nach Wert der aktuellen Fahrzeuggeschwindigkeit zwei unterschiedliche Szenarien möglich: Sofern die aktuelle Fahrzeuggeschwindigkeit die erfasste vorgeschriebene Höchstgeschwindigkeit nicht übersteigt, bleibt die aktuelle Fahrzeuggeschwindigkeit bzw. Beschleunigung unverändert. Dies bedeutet, dass innerhalb des Geschwindigkeitsbereichs von 0 km/h bis zur vorgeschriebenen Höchstgeschwindigkeit der Betrieb des Gaspedals wie gewohnt erfolgt und das Motordrehmoment der Gaspedalposition folgt. Wenn die Fahrzeuggeschwindigkeit die eingestellte Geschwindigkeitsbegrenzung erreicht, wird keine Drehmomentanforderung mehr an den Verbrennungsmotor übermittelt, so dass das Fahrzeug nicht mehr beschleunigt wird. Die Geschwindigkeitsbegrenzung wird dem Fahrer fortwährend z.B. in der Instrumententafel angezeigt und ist abhängig von der aktuell erfassten vorgeschriebenen Höchstgeschwindigkeit.

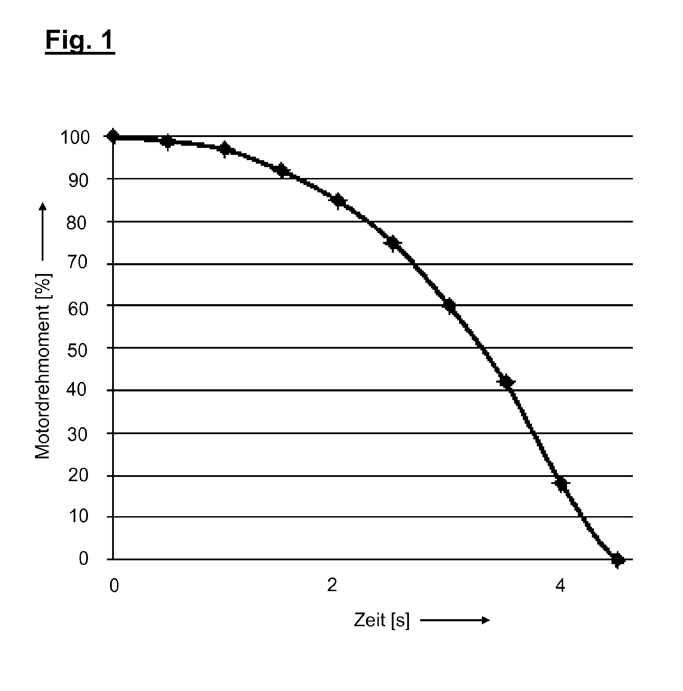

Wenn hingegen die aktuelle Fahrzeuggeschwindigkeit die vorgeschriebene Höchstgeschwindigkeit übersteigt, wird keine Motordrehmomentanforderung mehr an den Verbrennungsmotor übermittelt. Folglich wird die Fahrzeuggeschwindigkeit umgehend reduziert, wobei nach einer gewissen Verzögerungszeitspanne (von z.B. 10s nach erstmaliger Überschreitung der vorgeschriebenen Höchstgeschwindigkeit) ein (mit den Euro-NCAP-Vorschriften im Einklang stehendes) akustisches Warnsignal ausgegeben wird. Gemäß Fig. 1 erfolgt vorzugsweise die Reduzierung der Motordrehmomentanforderung insofern in progressiver Weise, als die Motordrehmomentanforderung während einer Zeitspanne von z.B. einigen Sekunden (s) nicht vollständig auf Null gesetzt wird, sondern erst nach dieser Zeitspanne den Wert 0% annimmt.

Wenn bei Aktivierung der erfindungsgemäßen Fahrassistenzvorrichtung keine Information über eine vorgeschriebene Höchstgeschwindigkeit vorliegt, wird die Fahrzeuggeschwindigkeit (abgesehen von einer im Weiteren noch beschriebenen Ausnahme) nicht begrenzt. Ferner wird immer dann, wenn eine Information über eine neue vorgeschriebene Höchstgeschwindigkeit vorliegt, die Geschwindigkeitsbegrenzung sofort (ggf. bis auf systembedingte Reaktionszeiten) angepasst. Wenn die aktuelle Fahrzeuggeschwindigkeit die jeweils erfasste vorgeschriebene Höchstgeschwindigkeit übersteigt, wird ebenfalls ein geeignetes Warnsignal erzeugt, es erfolgt dann jedoch eine sofortige Reduzierung des Drehmoments auf 0% (d.h. die Reduzierung des Drehmoments erfolgt dann nicht wie zuvor beschrieben in progressiver Weise).

Während der Fahrt in dem autonomen, durch die erfindungsgemäße Fahrassistenzeinrichtung gesteuerten Betriebsmodus wird die Geschwindigkeitsbegrenzung kontinuierlich an die jeweils aktuell erfasste vorgeschriebene Höchstgeschwindigkeit angepasst. Dies bedeutet, dass die Geschwindigkeitsbegrenzung fortwährend (ggf. auch unerwünschten) Änderungen der Geschwindigkeitsgrenzwerte ausgesetzt ist. Um diesem Umstand Rechnung zu tragen, wird der Fahrer gemäß der Erfindung zumindest vorübergehend in die Lage versetzt, die Geschwindigkeitsbegrenzung manuell einzustellen, was insbesondere dann erfolgen kann, wenn der Fahrer eine andere Geschwindigkeitsbegrenzung als diejenige der vorgeschriebenen Höchstgeschwindigkeit wünscht.

Um eine solche Einstellung auf eine andere Geschwindigkeitsbegrenzung zu ermöglichen, ist eine bestimmte Fahrereingabe erforderlich. Die Implementierung dieser Fahrereingabe erfolgt vorzugsweise so einfach und intuitiv wie möglich, um eine unnötige Ablenkung des Fahrers zu vermeiden. Dies kann unter Ausnutzung bereits vorhandener Tasten erfolgen. Beispielsweise kann eine Einstellung der Geschwindigkeitsbegrenzung in vorbestimmten Schritten von z.B. 5 km/h erfolgen, indem z.B. typischerweise am Lenkrad oder in dessen Nähe angebrachte "+"- oder "-"-Tasten betätigt werden. Eine solche Anpassung kann z.B. in Situationen wünschenswert sein, in denen die vorgeschriebene Höchstgeschwindigkeit dem Fahrer als zu niedrig oder als zu hoch erscheint.

Wenn nun nach einer solchen manuellen Einstellung der Geschwindigkeitsbegrenzung eine neue vorgeschriebene Höchstgeschwindigkeit erfasst wird, welche sich von der zuletzt erfassten Höchstgeschwindigkeit unterscheidet, sind zwei unterschiedliche Reaktionen des Systems möglich: Zum einen kann die Fahrassistenzeinrichtung die neue Geschwindigkeitsbegrenzung unmittelbar übernehmen und die zuvor vom Fahrer eingestellte Geschwindigkeitsbegrenzung ersetzen. Andererseits kann die Fahrassistenzeinrichtung auch auf eine fahrerseitige Bestätigung (z.B. die Betätigung einer bestimmten Taste) warten, bevor die neue Geschwindigkeitsbegrenzung übernommen wird.

Wenn zu irgendeinem Zeitpunkt keine Geschwindigkeitsbegrenzung vorliegt (z.B. keine diesbezügliche Information sensorgestützt erfasst wird), geht das System in den Standby-Modus (ohne Geschwindigkeitsbegrenzung) über. Dieser Zustand wird solange beibehalten, bis erneut eine vorgeschriebene Höchstgeschwindigkeit erfasst wird oder der Fahrer mittels einer Eingabe (z.B. über die "+"/"-"-Tasten) eine Geschwindigkeitsbegrenzung vorgibt.

Wenn seitens der automatischen Verkehrszeichenerkennung aus irgendwelchen Gründen eine aktuell gültige vorgeschriebene Höchstgeschwindigkeit außer Acht gelassen wird, der Fahrer jedoch weiß, dass eine solche vorgeschriebene Höchstgeschwindigkeit immer noch gültig ist, wird dies vorzugsweise dem Fahrer angezeigt. In diesem Falle kann z.B. die mittels der Fahrassistenzeinrichtung angezeigte Geschwindigkeitsbegrenzung grau oder durchgestrichen erscheinen, wodurch dem Fahrer zwar das Vorliegen des Standby-Modus, jedoch auch immer noch der Wert der Geschwindigkeitsbegrenzung angezeigt wird. In diesem Falle wird es vorzugsweise dem Fahrer (z.B. durch einfaches Betätigen einer "Wiederaufnahme"-Taste) ermöglicht, die Geschwindigkeitsbegrenzung zu reaktivieren und den gespeicherten Wert wieder aufzunehmen.

Vorzugsweise ist es dem Fahrer jederzeit möglich, die erfindungsgemäße Fahrassistenzeinrichtung manuell zu deaktivieren, beispielsweise mittels Tasten oder Schaltern (z.B. einem "Aus"-Schalter), wie sie bei einer manuellen Geschwindigkeitsbegrenzungsvorrichtung vorhanden sind.

Gemäß einer Ausführungsform kann eine automatisch vorgegebene Geschwindigkeitsbegrenzung jederzeit durch den Fahrer überstimmt bzw. außer Kraft gesetzt werden. Dies kann z.B. mittels Durchtreten des Gaspedals, der Betätigung eines "Kick-Down"-Schalters oder auch in anderer Weise erfolgen.

Grundsätzlich ist zu beachten, dass im Unterschied zu einer rein manuell gesteuerten Geschwindigkeitsbegrenzungseinrichtung bei der erfindungsgemäßen "intelligenten" Fahrassistenzeinrichtung die jeweils eingestellte Geschwindigkeitsbegrenzung u.U. nicht durch Fahrereingaben vorgegeben wird, sondern vielmehr aufgrund von Eingangssignalen durch die automatische Verkehrszeichenerkennung, was zu unerwünschten oder sogar fehlerhaften GeschwindigkeitsbegrenzungsEinstellungen führen kann. Insbesondere in Situationen, in denen in fehlerhafter Weise eine zu niedrige vorgeschriebene Höchstgeschwindigkeit erfasst und von der Fahrassistenzeinrichtung übernommen wird, ist daher sicherzustellen, dass der Fahrer diese Geschwindigkeitsbegrenzung in einfacher Weise und möglichst intuitiv überstimmen bzw. außer Kraft setzen kann, wozu im Weiterem beispielhafte Ausführungsformen beschrieben werden. Die Realisierung einer solchen Überstimmung bzw. Außerkraftsetzung ist nicht auf die vorstehend beschriebene Situation der fehlerhaften Erfassung einer vorgeschriebenen Höchstgeschwindigkeit beschränkt, sondern grundsätzlich jederzeit in einer beliebigen Situation möglich.

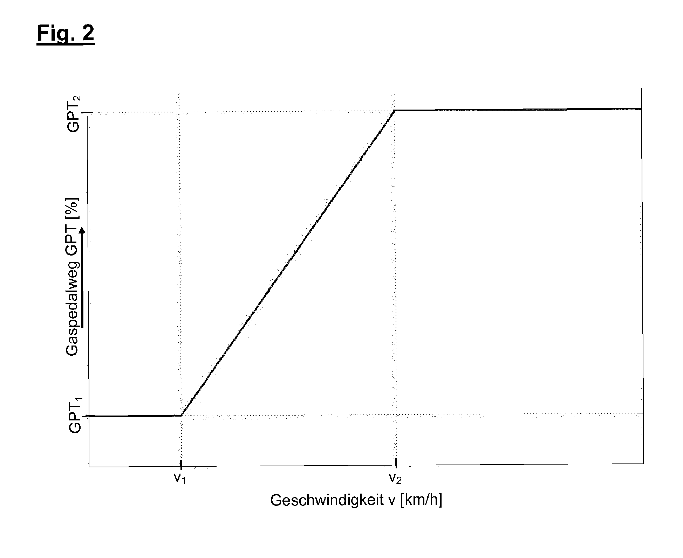

Gemäß einer ersten Ausführungsform zur Realisierung der Überstimmung bzw. Außerkraftsetzung einer vorgegebenen Geschwindigkeitsbegrenzung kann diese basierend auf einem geschwindigkeitsabhängigen Schwellenwert für die Gaspedalposition erfolgen. Im Diagramm von Fig. 2 ist ein beispielhafter Verlauf eines geschwindigkeitsabhängigen Wertes für den Gaspedalweg (GPT) dargestellt, in welchem mit wachsender Fahrzeuggeschwindigkeit der jeweils zur Außerkraftsetzung einer vorgegebenen Geschwindigkeitsbegrenzung zu überschreitende Schwellenwert bis zu einem Wert v₁ der Fahrzeuggeschwindigkeit GPT₁ beträgt, dann bis zum Erreichen einer Fahrzeuggeschwindigkeit von v₂ linear auf GPT₂ ansteigt und für Fahrzeuggeschwindigkeiten oberhalb von v₂ ebenfalls GPT₂ beträgt.

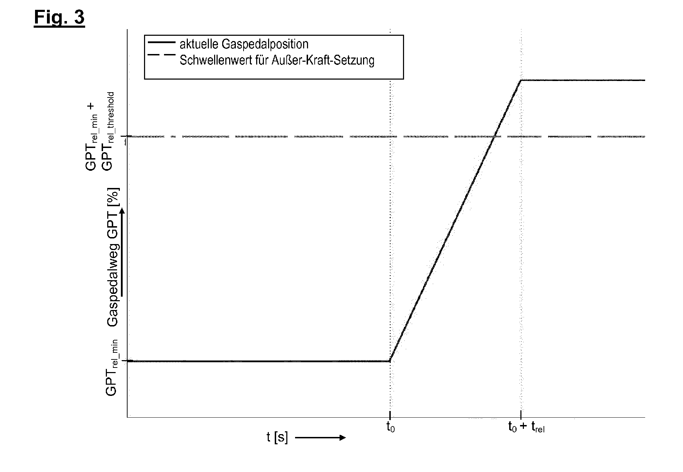

In einer weiteren, anhand von Fig. 3 beschriebenen Ausführungsform kann ein typisches Fahrerverhalten zur Überstimmung bzw. Außerkraftsetzung einer vorgegebenen Geschwindigkeitsbegrenzung genutzt werden, wie es auftrifft, wenn der Fahrer das Fahrzeug plötzlich beschleunigen möchte, wobei er typischerweise rasch auf das Gaspedal tritt: Wenn dementsprechend durch die Fahrassistenzeinrichtung eine plötzliche und unerwartete Einstellung der Geschwindigkeitsbegrenzung unterhalb der aktuellen Fahrzeuggeschwindigkeit erfolgt, mit welcher der Fahrer nicht einverstanden ist, kann eine solche rasche Gaspedalbetätigung als Trigger-Signal für die Deaktivierung der Geschwindigkeitsbegrenzung dienen. In einer weiteren Ausführungsform kann im Falle einer solche raschen Gaspedalbetätigung die Geschwindigkeitsbegrenzung auf einen vormaligen Wert (d.h. einen Wert, der vorlag, bevor die unerwartete Geschwindigkeitsbegrenzung erfolgte) gesetzt werden.

Ein lediglich beispielhafter, geeigneter Wert für die besagte Änderungsrate kann etwa einem Gaspedalweg von 25 % bezogen auf den maximal möglichen Gaspedalweg innerhalb einer Zeitspanne von 100 ms entsprechen. Zusätzlich kann gefordert werden, dass die Gaspedalposition zu Beginn des für die "Überstimmung" bzw. "Außerkraftsetzung" erforderlichen Manövers oberhalb eines bestimmten Schwellenwerts von z.B. 20 % liegt, um zu vermeiden, dass die Außerkraftsetzung in unbeabsichtigter Weise erfolgt. Hierdurch wird dem Umstand Rechnung getragen, dass eine Betätigung des Gaspedals ausgehend von der "0 %-Position" meistens mit einer raschen Änderung auf einen höheren Wert von z.B. 25 % einhergeht. Eine beispielhafte geeignete Charakteristik ist in Fig. 3 dargestellt, wobei hier der Gaspedalweg GPT infolge einer zum Zeitpunkt t₀ erfolgenden Gaspedalbetätigung bis zu einem Zeitpunkt t₀+tᵣₑₗ um wenigstens GPT_{rel_threshold} ansteigen muss, damit die vorgegebene Geschwindigkeitsbegrenzung außer Kraft gesetzt wird.

Bei Fahrzeugen mit Schaltgetriebe sollte die zuvor beschriebene Außerkraftsetzung auf Basis der Änderungsrate der Gaspedalposition zur Vermeidung unerwünschter Außerkraftsetzungen während eines Schaltvorgangs deaktiviert werden.

In einer weiteren Ausführungsform kann der Fahrer einen positiven Offsetwert zwischen der erfassten vorgeschriebenen Höchstgeschwindigkeit und der eingestellten Geschwindigkeitsbegrenzung einstellen. Hierbei kann beispielsweise die Erfassung einer neuen vorgeschriebenen Höchstgeschwindigkeit in einer Geschwindigkeitsbegrenzung auf einen Wert "vorgeschriebene Höchstgeschwindigkeit + Offsetwert" (in km/h) resultieren. Beispielsweise ermöglicht die Einstellung eines Offsetwerts von 5 km/h in einem Streckenbereich, in dem eine vorgeschriebene Höchstgeschwindigkeit von 100 km/h erfasst wird, auch noch die Fahrt bis zu einer Geschwindigkeit von 105 km/h.

Im Weiteren wird die Wechselwirkung der erfindungsgemäßen Fahrassistenzeinrichtung mit der automatischen Verkehrszeichenerkennung beschrieben. Bei einer herkömmlichen automatischen Verkehrszeichenerkennung wird der aktuell erfasste Wert der vorgeschriebenen Höchstgeschwindigkeit dem Fahrer z.B. in der Armaturentafel angezeigt. Zusätzlich kann der Fahrer im Falle einer Überschreitung der vorgeschriebenen Höchstgeschwindigkeit gewarnt werden, was beispielsweise durch Aufblinken der aktuell erfassten Höchstgeschwindigkeit in der Instrumententafel erfolgen kann. Zugleich wird für den Fall, dass bei aktivierter Fahrassistenzeinrichtung diese auf einen Wert eingestellt ist, welcher durch die Verkehrszeichenerkennung angezeigt wird, bei Überschreiten dieser vorgeschriebenen Höchstgeschwindigkeit ebenfalls wenigstens ein Warnsignal (beispielsweise ein akustisches und ein visuelles Warnsignal) erzeugt. Gemäß der Erfindung wird hierbei vorzugsweise ein mögliches weiteres Warnsignal aufgrund der automatischen Verkehrszeichenerfassung unterdrückt, sobald das Warnsignal der erfindungsgemäßen Fahrassistenzeinrichtung ausgelöst wird. Wenn die Fahrassistenzeinrichtung wieder (z.B. durch den Fahrer) deaktiviert wird, endet die Unterdrückung eines möglichen Warnsignals durch die automatische Verkehrszeichenerkennung.

In manchen Situationen kann es gewünscht sein, dass die Geschwindigkeitsbegrenzung nicht automatisch auf die aktuell erfasste vorgeschriebene Höchstgeschwindigkeit, sondern auf einen niedrigeren Wert gesetzt wird. So gelten beispielsweise in manchen europäischen Ländern andere Geschwindigkeitsbeschränkungen für ein Fahrzeug mit Anhänger. Wenn z.B. in einem Land für ein Fahrzeug mit Anhänger eine vorgeschriebene Höchstgeschwindigkeit von 80 km/h gilt, ist für ein solches Fahrzeug mit Anhänger auf einer Strecke mit einer generellen Höchstgeschwindigkeit von 100 km/h stattdessen eine Begrenzung auf 80 km/h sinnvoll.

Eine automatische Geschwindigkeitsbegrenzung kann ferner auch in Situationen wünschenswert sein, in denen keine Information über eine vorgeschriebene Höchstgeschwindigkeit vorliegt (beispielsweise dann, wenn die automatische Verkehrszeichenerkennung lediglich auf Basis einer Kamera als Sensor erfolgt und nach Vorbeifahrt an einem Verkehrszeichen, welches eine vorgeschriebene Höchstgeschwindigkeit aufhebt, ein Land mit genereller Geschwindigkeitsbegrenzung von z.B. 120 km/h erreicht wird). Der Fahrer kann die besagte Funktion zur Vorgabe einer maximalen Grenzgeschwindigkeit z.B. durch Setzen oder Entfernen eines Häkchens in einem Kontrollkästchen aktivieren oder deaktivieren, sowie ggf. einen Wert für die maximale Grenzgeschwindigkeit (z.B. in Schritten von 5 km/h einen Wert zwischen 80 und 180 km/h) eingeben. Bei Deaktivierung der Funktion erfolgt keine Beeinflussung der Funktionsweise der Fahrassistenzeinrichtung.

Wenn hingegen die Funktion der maximalen Grenzgeschwindigkeit aktiviert ist, stellt der Wert dieser maximalen Grenzgeschwindigkeit die höchste Geschwindigkeitsbegrenzung dar, welche automatisch durch die Fahrassistenzeinrichtung vorgegeben wird. Die Fahrassistenzeinrichtung wird dann keinen Wert oberhalb der gewählten maximalen Grenzgeschwindigkeit einstellen, selbst wenn eine höhere vorgeschriebene Höchstgeschwindigkeit erfasst wird. Wenn beispielsweise die Funktion der maximalen Grenzgeschwindigkeit aktiviert ist und der Wert für diese maximale Grenzgeschwindigkeit auf 80 km/h eingestellt wird, und wenn in dieser Situation eine vorgeschriebene Höchstgeschwindigkeit von 100 km/h erfasst wird, setzt die Fahrassistenzeinrichtung eine automatische Geschwindigkeitsbegrenzung auf 80 km/h (und nicht auf 100 km/h).

Die Geschwindigkeitsbegrenzung wird ferner auch auf den Wert der maximalen Grenzgeschwindigkeit gesetzt, wenn keine Information über eine vorgeschriebene Höchstgeschwindigkeit vorliegt. Beispielsweise erfolgt in einer Situation, in welcher nach Vorbeifahrt an einem Zeichen zur Aufhebung einer vorgeschriebenen Höchstgeschwindigkeit ein Verkehrszeichenerkennungssystem mit einer Kamera als einzigen Sensor keine vorgeschriebene Höchstgeschwindigkeit erkennt, eine automatische Geschwindigkeitsbegrenzung durch die Fahrassistenzeinrichtung auf 80 km/h.

Vorzugsweise werden die gewählten Einstellungen der erfindungsgemäßen Fahrassistenzeinrichtung auch nach Abschalten der Zündung gespeichert. Bei einem Neustart können dann die gespeicherten Menüeinstellungen erneut geladen werden, so dass der Fahrer nicht bei jedem neuen Betriebszyklus eine erneute Eingabe seiner bevorzugten Einstellungen vorzunehmen braucht. Bei diesen Einstellungen kann es sich insbesondere um die Auswahl zwischen "manuellem" und "intelligentem" Modus der Fahrassistenzeinrichtung, den zuvor beschriebenen Offsetwert der Geschwindigkeitsbegrenzung und/oder die ebenfalls zuvor beschriebene maximale Grenzgeschwindigkeit handeln.

In Situationen, bei denen keine Information über eine vorgeschriebene Höchstgeschwindigkeit vorliegt oder in denen der Fahrer eine bestimmte Taste betätigt, kann die erfindungsgemäße Fahrassistenzvorrichtung in einen (vorübergehenden) Standby-Zustand übergehen. In diesem Zustand kann der Fahrer über die angezeigte Geschwindigkeitsbegrenzung hinaus beschleunigen, indem er das Gaspedal wie gewohnt betätigt. Dieser Standby-Zustand sollte jedoch dem Fahrer angezeigt werden, was beispielsweise durch Grau-Darstellung sämtlicher Anzeigen der Fahrassistenzeinrichtung erfolgen kann, so dass der Fahrer intuitiv über den Standby-Zustand informiert ist. Bei einem in dieser Weise angezeigten Standby-Modus kann das System erneut in den Geschwindigkeitsbegrenzungsmodus überführt werden, indem eine bestimmte Taste betätigt wird. Dabei kann auch abhängig davon, welche Taste betätigt wird, entweder die angezeigte vorgeschriebene Höchstgeschwindigkeit oder auch die aktuelle Fahrzeuggeschwindigkeit als Geschwindigkeitsbegrenzung eingestellt bzw. gewählt werden. Des Weiteren kann das System durch Betätigung einer bestimmten Taste auch vollständig abgeschaltet werden. Wenn sich das System mangels vorliegender Information über eine Geschwindigkeitsbegrenzung im Standby-Zustand befindet, geht das System automatisch in den Geschwindigkeitsbegrenzungsmodus über, sobald eine neue Geschwindigkeitsbegrenzungsinformation verfügbar ist.

## Patentansprüche

1. Fahrassistenzvorrichtung für ein Kraftfahrzeug, wobei das Kraftfahrzeug eine Verkehrszeichenüberwachungseinrichtung sowie eine Geschwindigkeitsbegrenzungseinrichtung aufweist, welche die Fahrgeschwindigkeit des Kraftfahrzeuges in einem Geschwindigkeitsbegrenzungsmodus auf einen Grenzwert begrenzt,
**dadurch gekennzeichnet, dass**
die Fahrassistenzvorrichtung dazu konfiguriert ist, in dem Geschwindigkeitsbegrenzungsmodus den jeweils geltenden Grenzwert in Abhängigkeit von einer von der Verkehrszeichenüberwachungseinrichtung ermittelten vorgeschriebenen Höchstgeschwindigkeit automatisch anzupassen, sofern keine manuelle Änderung dieses Grenzwertes durch den Fahrer erfolgt.

2. Fahrassistenzvorrichtung nach Anspruch 1,
**dadurch gekennzeichnet, dass**
diese ferner dazu konfiguriert ist, für den Fall, dass zum Zeitpunkt der Aktivierung des Geschwindigkeitsbegrenzungsmodus die aktuelle Fahrgeschwindigkeit eine von der Verkehrszeichenüberwachungseinrichtung ermittelte vorgeschriebene Höchstgeschwindigkeit übersteigt, eine Reduzierung der Motordrehmomentanforderung auf Null innerhalb einer vorgegebenen Verzögerungszeit vorzunehmen.

3. Fahrassistenzvorrichtung nach Anspruch 1 oder 2,
**dadurch gekennzeichnet, dass**
diese ferner dazu konfiguriert ist, für den Fall, dass nach erfolgter Aktivierung des Geschwindigkeitsbegrenzungsmodus die aktuelle Fahrgeschwindigkeit eine von der Verkehrszeichenüberwachungseinrichtung ermittelte vorgeschriebene Höchstgeschwindigkeit überschreitet, eine sofortige Reduzierung der Motordrehmomentanforderung auf Null zu veranlassen.

4. Fahrassistenzvorrichtung nach einem der Ansprüche 1 bis 3,
**dadurch gekennzeichnet, dass**
diese ferner dazu konfiguriert ist, die Begrenzung der Fahrgeschwindigkeit des Kraftfahrzeuges in dem Geschwindigkeitsbegrenzungsmodus in Reaktion auf eine Fahrereingabe außer Kraft zu setzen.

5. Fahrassistenzvorrichtung nach einem der vorhergehenden Ansprüche,
**dadurch gekennzeichnet, dass**
diese ferner dazu konfiguriert ist, die Anpassung des in dem Geschwindigkeitsbegrenzungsmodus jeweils geltenden Grenzwertes in Abhängigkeit von der von der Verkehrszeichenüberwachungseinrichtung ermittelten vorgeschriebenen Höchstgeschwindigkeit unter Berücksichtigung eines vom Fahrer vorgebbaren Offsetwertes vorzunehmen.

6. Fahrassistenzvorrichtung nach einem der vorhergehenden Ansprüche,
**dadurch gekennzeichnet, dass**
diese ferner dazu konfiguriert ist, unabhängig von der Ermittlung einer vorgeschriebenen Höchstgeschwindigkeit durch die Verkehrszeichenüberwachungseinrichtung die Fahrgeschwindigkeit auf eine vom Fahrer vorgebbare maximale Grenzgeschwindigkeit zu begrenzen.

7. Fahrassistenzvorrichtung nach Anspruch 5 oder 6,
**dadurch gekennzeichnet, dass**
diese ferner dazu konfiguriert ist, einen vom Fahrer vorgebbaren Offsetwert und/oder eine vom Fahrer vorgebbare maximale Grenzgeschwindigkeit nach Abschalten der Zündung des Kraftfahrzeuges zu speichern.

8. Fahrassistenzvorrichtung nach einem der vorhergehenden Ansprüche,
**dadurch gekennzeichnet, dass**
diese ferner dazu konfiguriert ist, im Geschwindigkeitsbegrenzungsmodus ein Warnsignal zu erzeugen, falls eine von der Verkehrszeichenüberwachungseinrichtung ermittelte vorgeschriebene Höchstgeschwindigkeit überschritten wird.

9. Fahrassistenzvorrichtung nach Anspruch 8,
**dadurch gekennzeichnet, dass**
bei der Erzeugung dieses Warnsignals durch die Fahrassistenzvorrichtung die Erzeugung eines zusätzlichen Warnsignals durch die Verkehrszeichenüberwachungseinrichtung unterdrückt wird.

10. Fahrassistenzvorrichtung nach einem der vorhergehenden Ansprüche,
**dadurch gekennzeichnet, dass**
diese ferner dazu konfiguriert ist, in einer Situation, in der keine von der Verkehrszeichenüberwachungseinrichtung ermittelte vorgeschriebene Höchstgeschwindigkeit vorliegt, oder in Reaktion auf eine Fahrereingabe aus dem Geschwindigkeitsbegrenzungsmodus in einen Standby-Zustand überzugehen, wobei dieser Standby-Zustand dem Fahrer signalisiert wird.
